(19) **Europäisches Patentamt**
**European Patent Office**
**Office européen des brevets**

(11) **EP 4 345 933 A1**

(12) **EUROPEAN PATENT APPLICATION**
published in accordance with Art. 153(4) EPC

(43) Date of publication:
**03.04.2024 Bulletin 2024/14**

(21) Application number: **22872071.0**

(22) Date of filing: **22.09.2022**

(51) International Patent Classification (IPC):
***H01M 4/13*** (2010.01)      ***H01M 4/62*** (2006.01)

(52) Cooperative Patent Classification (CPC):
**H01M 4/13; H01M 4/139; H01M 4/62;**
**H01M 10/0525; H01M 10/0567; H01M 10/058;**
**H01M 10/42;** Y02E 60/10

(86) International application number:
**PCT/CN2022/120594**

(87) International publication number:
**WO 2023/046027 (30.03.2023 Gazette 2023/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.09.2021   CN 202111122407**

(71) Applicant: **BYD Company Limited**
**Shenzhen, Guangdong 518118 (CN)**

(72) Inventors:
• **YUAN, Xiaotao**
  **Shenzhen, Guangdong 518118 (CN)**
• **XU, Zhan**
  **Shenzhen, Guangdong 518118 (CN)**
• **WU, Xuanwei**
  **Shenzhen, Guangdong 518118 (CN)**
• **YE, Tao**
  **Shenzhen, Guangdong 518118 (CN)**
• **HE, Kefeng**
  **Shenzhen, Guangdong 518118 (CN)**

(74) Representative: **Arnold & Siedsma**
**Bezuidenhoutseweg 57**
**2594 AC The Hague (NL)**

(54) **LITHIUM ION BATTERY ELECTRODE AND PREPARATION METHOD THEREFOR AND LITHIUM ION BATTERY**

(57)     A lithium-ion battery electrode, a preparation method thereof, and a lithium-ion battery are disclosed. The electrode includes a current collector and n electrode plate layers laminated on the current collector, n being an integer greater than or equal to 2. The electrode plate layer contains a pore-forming agent. A content of the pore-forming agent in the electrode plate layers gradually increases along a direction gradually away from the current collector. The pore-forming agent is selected from an electrolyte solution additive which is solid at normal temperature.

FIG. 1

**EP 4 345 933 A1**

**Description**

**CROSS REFERENCE TO RELATED APPLICATION**

This application claims priority to and benefits of Chinese Patent Application No. 202111122407.8, filed on September 24, 2021. The entire content of the above-referenced application is incorporated herein by reference.

**FIELD**

The present disclosure relates to the technical field of lithium-ion batteries, and specifically to a lithium-ion battery electrode, a preparation method thereof, and a lithium-ion battery.

**BACKGROUND**

Increasing the areal density and compaction density of electrodes of lithium-ion batteries can effectively improve the energy density of lithium-ion batteries. However, in the process of increasing the areal density and compaction density of the electrode, with the increase of electrode thickness, the tortuosity of pores in the electrode becomes higher, and the diffusion path of lithium ions in the electrode becomes longer, leading to an increased impedance of the electrode, and affecting the kinetic properties of the electrode.

To improve the kinetic properties of the electrode, it is necessary to construct a suitable pore structure in the electrode to provide a channel for the high-speed diffusion of lithium ions in the electrode. However, conventional lithium-ion battery electrodes still have the problems of unreasonable distribution of pore structures in the electrode and poor kinetic properties of the electrode.

**SUMMARY**

An objective of the present disclosure is to resolve the problems of unreasonable distribution of pore structures and poor kinetic properties of conventional lithium-ion battery electrodes, and provide a lithium-ion battery electrode, a preparation method thereof, and a lithium-ion battery.

To achieve the above objective, the present disclosure provides a lithium-ion battery electrode, including a current collector and n electrode plate layers laminated on the current collector, n being an integer greater than or equal to 2, where

the electrode plate layer contains a pore-forming agent, and a content of the pore-forming agent in each of the electrode plate layers gradually increases along a direction gradually away from the current collector; and the pore-forming agent is selected from an electrolyte solution additive which is solid at normal temperature.

Further, the electrode plate layer further contains an active material; and a content of the pore-forming agent in a first electrode plate layer is between 0 and 4 parts by weight, a content of the pore-forming agent in an $n^{th}$ electrode plate layer is between 1 and 10 parts by weight, and a content of the pore-forming agent from second to $(n-1)^{th}$ electrode plate layers is between 1 and 10 parts by weight, relative to 100 parts by weight of the active material, along the direction gradually away from the current collector.

Further, each of the electrode plate layers has a pore structure, and at least a portion of the pore structure is filled with the pore-forming agent; and

along the direction gradually away from the current collector, a porosity $\delta_i$ of the pore structure in an $i^{th}$ electrode plate layer is:

$$\delta_i = 1 - \left[\frac{(1-\varepsilon_i)}{\rho_1}\right] \Big/ \left[\frac{(1-\varepsilon_i)}{\rho_2} + \frac{\varepsilon_i}{\rho_3}\right].$$

$1 \leq i \leq n$, and i is an integer; $\varepsilon_i$ represents a weight ratio of the pore-forming agent to the active material in the $i^{th}$ electrode plate layer; $\rho_1$ represents a true density of the active material, measured in g/cm³; $\rho_2$ represents an ultimate compaction density of the active material, measured in g/cm³; and $\rho_3$ represents a true density of the pore-forming agent, measured in g/cm³.

Further, in the electrode, an average porosity of the pore structures in the n electrode plate layers satisfies the following condition:

$$0.22 \leq 1 - \left[\frac{(\sum_{i=1}^{n}(1-\delta_i)*d_i)}{\sum_{i=1}^{n} d_i}\right] \leq 0.44.$$

$d_i$ represents a thickness of an $i^{th}$ electrode plate layer, measured in μm.

Further, in the electrode, porosities of the pore structures in two adjacent electrode plate layers satisfy the following condition:

$$\delta_{i+1} = \delta_i + (\delta_n - \delta_1)/n.$$

Further, a bulk density of a first electrode plate layer is between 2.55 g/cm$^3$ and 2.75 g/cm$^3$, a bulk density of an $n^{th}$ electrode plate layer is between 2.0 g/cm$^3$ and 2.5 g/cm$^3$, and bulk densities from second to (n-1)$^{th}$ electrode plate layers are between 2.0 g/cm$^3$ and 2.70 g/cm$^3$, along the direction gradually away from the current collector.

Further, in the electrode, a total thickness of the n electrode plate layers is between 20 μm and 200 μm.

Further, n is an integer between 2 and 10.

Further, n is an integer between 2 and 5.

Further, each of the electrode plate layers further contains a conductive agent and a binder, and a content of the conductive agent is between 0.1 and 5 parts by weight and a content of the binder is between 0.5 and 5 parts by weight relative to 100 parts by weight of the active material;

the active material is selected from at least one of lithium nickel cobalt manganese oxide, lithium iron phosphate, or lithium manganate;

the conductive agent is selected from at least one of carbon nanotubes, graphene, carbon black, or carbon fibers;

the binder is selected from polyvinylidene fluoride and/or polytetrafluoroethylene; and

the pore-forming agent is selected from at least one of lithium oxalyldifluoroborate, lithium bis(fluorosulfonyl)imide, lithium borate, lithium tetraborate, lithium tetrafluoroborate, lithium nitrate, or lithium chloride.

Further, the pore-forming agent is lithium oxalyldifluoroborate and/or lithium bis(fluorosulfonyl)imide.

The present disclosure further provides a method for preparing a lithium-ion battery electrode according to any one of the above embodiments, including:

n layers of electrode plates containing different contents of a pore-forming agent are sequentially laminated and press-fitted onto a current collector in ascending order of the contents of the pore-forming agent, to obtain the lithium-ion battery electrode.

Further, the electrode plate is prepared by the following method:

an active material, a conductive agent, a binder, and the pore-forming agent are air-crushed and mixed to obtain a mixed material;

the mixed material is heated and melted, followed by electrostatic spinning to obtain a fibrous material; and

the fibrous material is hot-pressed to obtain the electrode plate.

The present disclosure further provides a lithium-ion battery, including a porous electrode, the porous electrode being obtained by soaking a lithium-ion battery electrode according to any one of the above embodiments or a lithium-ion battery electrode prepared using the above method in an electrolyte solution.

According to the technical solutions, the lithium-ion battery electrode provided by the present disclosure includes a plurality of electrode plate layers having gradually increasing contents of the pore-forming agent, and the pore-forming agent is an electrolyte solution additive which is solid at normal temperature. After the electrode is soaked in an electrolyte solution, the pore-forming agent is dissolved in the electrolyte solution. In this way, an electrode with a gradient pore structure is formed, which can provide a channel for the rapid diffusion of lithium ions in the electrode, so that the lithium ions have a better diffusion path. Therefore, the lithium-ion battery electrode provided by the present disclosure has good kinetic properties.

The additional aspects and advantages of the present disclosure will be provided in the following description, some of which will become apparent from the following description or may be learned from practices of the present disclosure.

## BRIEF DESCRIPTION OF THE DRAWINGS

The drawings are provided for a further understanding of the present disclosure, and constitute a part of the description. The drawings and the detailed description below are used to explain the present disclosure, but are not intended to limit the present disclosure. In the drawings,

FIG. 1 schematically shows a schematic diagram of a dissolution process of a pore-forming agent in a single electrode plate layer according to an embodiment of the present disclosure; and
FIG. 2 schematically shows a schematic diagram of an arrangement relationship among a plurality of electrode plate layers after dissolution of a pore-forming agent according to an embodiment of the present disclosure.

## DETAILED DESCRIPTION

The specific embodiments of the present disclosure will be described in detail with reference to the accompanying drawings. It should be understood that the specific embodiments described herein are merely used for illustrating and explaining the present disclosure, and are not intended to limit the present disclosure.

A first aspect of the present disclosure provides a lithium-ion battery electrode, including a current collector and n electrode plate layers laminated on the current collector, n being an integer greater than or equal to 2. The electrode plate layer contains a pore-forming agent, and a content of the pore-forming agent in each of the electrode plate layers gradually increases along a direction gradually away from the current collector. The pore-forming agent is selected from an electrolyte solution additive which is solid at normal temperature.

In the lithium-ion battery electrode provided by the present disclosure, the pore-forming agent contained in each of the electrode plate layers can provide a function of maintaining the pore structures in the electrode plate layers during the preparation process of the electrode, so that the lithium-ion battery electrode has a good pore structure. In addition, because the pore-forming agent is a solid electrolyte solution additive at normal temperature, and the content of the pore-forming agent in each of the electrode plate layers gradually increases along the direction gradually away from the current collector. Therefore, after the electrode is soaked in an electrolyte solution, the pore-forming agent is dissolved in the electrolyte solution. In this way, an electrode with a gradient pore structure is formed, which can provide a channel for the rapid diffusion of lithium ions in the electrode, so that the lithium ions have a better diffusion path. Therefore, the lithium-ion battery electrode provided by the present disclosure has good kinetic properties.

Further, the tortuosity of pores in the lithium-ion battery electrode provided by the present disclosure is small, allowing for a higher gram capacity, a lower impedance, and a higher rate discharge retention rate of the electrode.

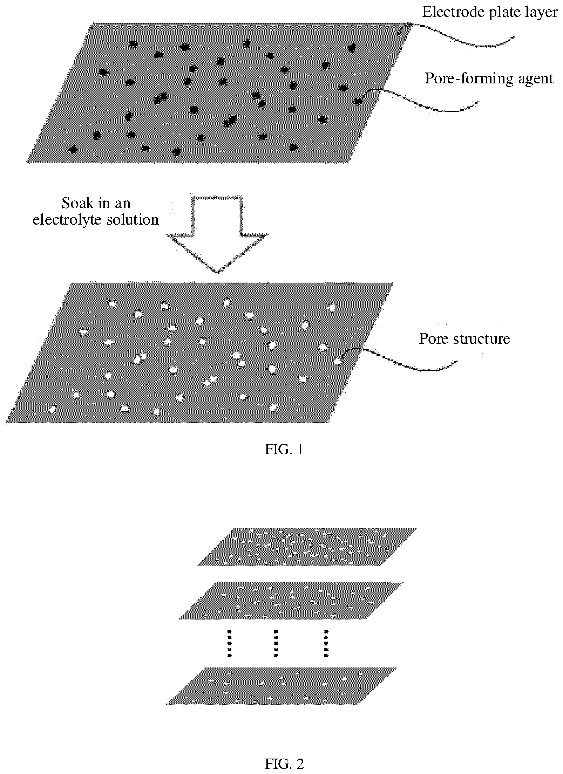

FIG. 1 schematically shows a schematic diagram of a dissolution process of a pore-forming agent in a single electrode plate layer according to an embodiment of the present disclosure. As shown in FIG. 1, after the electrode is soaked in the electrolyte solution, the pore-forming agent in the electrode plate layer dissolves to form a pore structure. FIG. 2 schematically shows a schematic diagram of an arrangement relationship among a plurality of electrode plate layers after dissolution of a pore-forming agent according to an embodiment of the present disclosure. The current collector is displayed below FIG. 2.

According to the present disclosure, the electrode plate layer may further contain an active material. The relative amounts of the active material and the pore-forming agent in the electrode plate layers may vary within a certain range. For example, the content of the pore-forming agent in a first electrode plate layer may be between 0 and 4 parts by weight, the content of the pore-forming agent in an nth electrode plate layer may be between 1 and 10 parts by weight, and the content of the pore-forming agent from second to (n-1)th electrode plate layers may be between 1 and 10 parts by weight, relative to 100 parts by weight of the active material along the direction gradually away from the current collector.

According to some embodiments of the present disclosure, for example, the content of the pore-forming agent in the first electrode plate layer may be between 0 and 2 parts by weight, the content of the pore-forming agent in the nth electrode plate layer may be between 4 and 8 parts by weight, and the content of the pore-forming agent from second to (n-1)th electrode plate layers may be between 2 and 6 parts by weight, relative to 100 parts by weight of the active material along the direction gradually away from the current collector. In this case, the lithium-ion battery electrode has a more reasonable gradient pore structure after being soaked in the electrolyte solution.

According to the present disclosure, each of the electrode plate layers has a pore structure, and at least a portion of the pore structure is filled with the pore-forming agent. A porosity of the pore structure in each electrode plate layer is determined by the content of the pore-forming agent. Specifically, along the direction gradually away from the current collector, a porosity $\delta_i$ of the pore structure in an ith electrode plate layer may be:

$$\delta_i = 1 - \left[\frac{(1-\varepsilon_i)}{\rho_1}\right] / \left[\frac{(1-\varepsilon_i)}{\rho_2} + \frac{\varepsilon_i}{\rho_3}\right].$$

$1 \leq i \leq n$, and i is an integer; $\varepsilon_i$ represents a weight ratio of the pore-forming agent to the active material in the ith electrode plate layer; $\rho_1$ represents a true density of the active material, measured in g/cm[3]; $\rho_2$ represents an ultimate compaction density of the active material, measured in g/cm$^3$; and $\rho_3$ represents a true density of the pore-forming agent, measured in g/cm$^3$.

For example, when the active material is lithium iron phosphate, the porosity $\delta_i$ of the pore structure in the i$^{th}$ electrode plate layer may be:

$$\delta_i = 1 - \left[\frac{(1-\varepsilon_i)}{3.6}\right] / \left[\frac{(1-\varepsilon_i)}{2.7} + \frac{\varepsilon_i}{\rho_3}\right].$$

3.6 is the true density of lithium iron phosphate, measured in g/cm$^3$; and 2.7 is an ultimate compaction density of lithium iron phosphate, measured in g/cm$^3$.

According to the present disclosure, to further increase the overall compaction density of the lithium-ion battery electrode, the porosities of all the pore structures in the n electrode plate layers in the electrode may satisfy the following condition:

$$0.22 \le 1 - \left[\frac{\left(\sum_{i=1}^{n}(1-\delta_i)*d_i\right)}{\sum_{i=1}^{n} d_i}\right] \le 0.44.$$

$d_i$ represents a thickness of the i$^{th}$ electrode plate layer, measured in $\mu$m, and 0.22 and 0.44 are respectively a maximum porosity and a minimum porosity that allow the lithium-ion battery electrode of the present disclosure to have better electrode performance (e.g., volumetric energy density).

According to the present disclosure, to further improve the properness of the gradient pore structure in the lithium-ion battery electrode, porosities of the pore structures in two adjacent electrode plate layers may meet the following condition:

$$\delta_{i+1} = \delta_i + (\delta_n - \delta_1)/n.$$

In this case, the porosity distribution of the pore structure in each electrode plate layer is reasonable, and the transition between the porosities of any two adjacent electrode plate layers is uniform, providing a better diffusion path for the diffusion of lithium ions in the electrode.

According to the present disclosure, a bulk density of each electrode plate layer may vary within a certain range. For example, a bulk density of a first electrode plate layer may be between 2.55 g/cm$^3$ and 2.75 g/cm$^3$, a bulk density of an n$^{th}$ electrode plate layer may be between 2.0 g/cm$^3$ and 2.5 g/cm$^3$, and bulk densities from second to (n-1)$^{th}$ electrode plate layers may be between 2.0 g/cm$^3$ and 2.70 g/cm$^3$, along the direction gradually away from the current collector.

In the present disclosure, specifically, the electrode plate layer adjacent to the current collector has a higher bulk density than those of an intermediate layer and an uppermost electrode plate layer, so that the lithium-ion battery electrode as a whole has a high bulk density, and therefore has a high energy density. In addition, because the uppermost electrode plate layer (the surface of the electrode) has a low bulk density, the surface of the lithium-ion battery electrode has a high porosity, facilitating the diffusion of lithium ions into the interior of the electrode.

According to the present disclosure, in the electrode, a total thickness of the n electrode plate layers may vary within a certain range. For example, the total thickness of the n electrode plate layers may be between 20 $\mu$m and 200 $\mu$m.

In the present disclosure, specifically, the thicknesses of the electrode plate layers may be uniformly distributed, and the thickness of the electrode plate layer with a specific porosity may be increased or reduced as required.

According to the present disclosure, a total number n of the electrode plate layers may vary within a certain range. For example, n may be an integer from between 2 and 10. According to some embodiments of the present disclosure, n is an integer from between 2 and 5. Specifically, a larger value of n indicates a more uniform gradient distribution of the pore structures in the lithium-ion battery electrode. However, with the increase of the value of n, the electrode preparation efficiency is reduced. Therefore, an appropriate value of n may be selected according to an actual requirement.

According to the present disclosure, each of the electrode plate layers further contains a conductive agent and a binder, and a content of the conductive agent may be between 0.1 and 5 parts by weight and a content of the binder may be between 0.5 and 5 parts by weight relative to 100 parts by weight of the active material;

The active material, the conductive agent, the binder, and the pore-forming agent may be selected from a certain range. For example, the active material may be selected from at least one of lithium nickel cobalt manganese oxide, lithium iron phosphate, or lithium manganate; the conductive agent may be selected from at least one of carbon nanotubes, graphene, carbon black, or carbon fibers; the binder may be selected from polyvinylidene fluoride and/or polytetrafluoroethylene; and the pore-forming agent may be selected from at least one of lithium oxalyldifluoroborate, lithium bis(fluorosulfonyl)imide, lithium borate, lithium tetraborate, lithium tetrafluoroborate, lithium nitrate, or lithium chloride. According to some embodiments of the present disclosure, the pore-forming agent is lithium oxalyldifluoroborate and/or lithium bis(fluorosulfonyl)imide.

A second aspect of the present disclosure provides a method for preparing a lithium-ion battery electrode according to any one of the above embodiments of the first aspect. The method includes: n layers of electrode plates containing different contents of a pore-forming agent are sequentially laminated and press-fitted onto a current collector in ascending order of the contents of the pore-forming agent, to obtain the lithium-ion battery electrode.

In the method of the present disclosure, the lithium-ion battery electrode is obtained by directly combining and press-fitting a plurality of electrode plate layers having different contents of the pore-forming agent. The combination is convenient and rapid. In addition, electrodes meeting different porosity requirements can be quickly obtained by adjusting the contents of the pore-forming agent in each of the electrode plate layers or replacing with electrode plate layers having different contents of the pore-forming agent, allowing for more options of the electrode design.

Further, the electrode plate is prepared by the following method, the steps include: an active material, a conductive agent, a binder, and the pore-forming agent are air-crushed and mixed to obtain a mixed material; the mixed material is heated and melted followed by electrostatic spinning to obtain a fibrous material; and the fibrous material is hot-pressed to obtain the electrode plate. Electrode plates with different contents of the pore-forming agent are prepared in advance from a dry electrode, for subsequent selection and adjustment.

The present disclosure further provides a lithium-ion battery, including a porous electrode, the porous electrode being obtained by soaking a lithium-ion battery electrode according to any one of the above embodiments of the first aspect or a lithium-ion battery electrode prepared using the method according to the second aspect in an electrolyte solution.

The present disclosure is further described below through examples, but the examples are not intended to limit the present disclosure. Raw materials, reagents, instruments, and equipment used in the examples are commercially available unless otherwise specified.

The electrode plate used in the embodiments of the present disclosure is prepared by the following method, the steps include:

an active material, a conductive agent, a binder, and the pore-forming agent are air-crushed and mixed to obtain a mixed material; then the mixed material is heated and melted, followed by electrostatic spinning to obtain a fibrous material; and the mixed material is finally hot-pressed to obtain the electrode plate. Electrode plates with different contents of the pore-forming agent are obtained by adjusting the addition amount of the pore-forming agent and repeating the above operations.

Example 1

A lithium-ion battery electrode was prepared by the following method.

(1) A first layer of electrode plate was press-fit on a current collector (aluminum foil) by hot pressing. The first layer of electrode plate contained an active material (lithium iron phosphate), a conductive agent (carbon tubes and carbon black), and a binder (polytetrafluoroethylene). A content of the conductive agent was 1 part by weight and a content of the binder was 3 parts by weight relative to 100 parts by weight of the active material. A thickness of the first layer of electrode plate was 50 $\mu$m. The first layer of electrode plate had a pore structure, and a porosity of the pore structure was calculated to be 0.25.

(2) A second layer of electrode plate was press-fit on the first layer of electrode plate by hot pressing, and fusion treatment was carried out to obtain the lithium-ion battery electrode. The second layer of electrode plate contained an active material (lithium iron phosphate), a conductive agent (carbon tubes and carbon black), a binder (polytetrafluoroethylene), and a pore-forming agent (lithium oxalyldifluoroborate, with a true density of 2.12 g/cm$^3$). A content of the conductive agent was 1 part by weight, a content of the binder was 3 parts by weight, and a content of the pore-forming agent was 4 parts by weight relative to 100 parts by weight of the active material. A thickness of the second layer of electrode plate was 50 $\mu$m. The second layer of electrode plate had a pore structure, at least a portion of the pore structure was filled with the pore-forming agent, and a porosity of the pore structure was calculated to be 0.294.

The lithium-ion battery electrode prepared in this example had two electrode plate layers. Along a direction gradually away from the current collector, the porosities of the pore structures in the electrode plate layers gradually increased. A total thickness of the two electrode plate layers was 100 $\mu$m, and an average porosity of the two electrode plate layers (obtained by weighted averaging according to the thicknesses of the upper and lower layers) was 0.272.

Example 2

A lithium-ion battery electrode was prepared by the following method.

(1) A first layer of electrode plate was press-fit on a current collector (aluminum foil) by hot pressing. The first layer of electrode plate contained an active material (lithium iron phosphate), a conductive agent (carbon tubes and carbon black), and a binder (polytetrafluoroethylene). A content of the conductive agent was 1 part by weight and a content of the binder was 3 parts by weight relative to 100 parts by weight of the active material. A thickness of the first layer of electrode plate was 33.3 μm. The first layer of electrode plate had a pore structure, and a porosity of the pore structure was calculated to be 0.25.

(2) A second layer of electrode plate was press-fit on the first layer of electrode plate by hot pressing. The second layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 2 parts by weight relative to 100 parts by weight of the active material. A thickness of the second layer of electrode plate was 33.3 μm. The second layer of electrode plate had a pore structure, at least a portion of the pore structure was filled with the pore-forming agent, and a porosity of the pore structure was calculated to be 0.272.

(3) A third layer of electrode plate was press-fit on the second layer of electrode plate by hot pressing, and fusion treatment was carried out to obtain the lithium-ion battery electrode. The third layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 4 parts by weight relative to 100 parts by weight of the active material. A thickness of the third layer of electrode plate was 33.3 μm. The third layer of electrode plate had a pore structure, at least a portion of the pore structure was filled with the pore-forming agent, and a porosity of the pore structure was calculated to be 0.294.

The lithium-ion battery electrode prepared in this example had three electrode plate layers. Along a direction gradually away from the current collector, the porosities of the pore structures in the electrode plate layers gradually increased. A total thickness of the three electrode plate layers was 100 μm, and an average porosity of the three electrode plate layers was 0.272.

Example 3

A lithium-ion battery electrode was prepared by the following method.

(1) A first layer of electrode plate was press-fit on a current collector (aluminum foil) by hot pressing. The first layer of electrode plate contained an active material (lithium iron phosphate), a conductive agent (carbon tubes and carbon black), and a binder (polytetrafluoroethylene). A content of the conductive agent was 1 part by weight and a content of the binder was 3 parts by weight relative to 100 parts by weight of the active material. A thickness of the first layer of electrode plate was 33.3 μm. The first layer of electrode plate had a pore structure, and a porosity of the pore structure was calculated to be 0.25.

(2) A second layer of electrode plate was press-fit on the first layer of electrode plate by hot pressing. The second layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 4 parts by weight relative to 100 parts by weight of the active material. A thickness of the second layer of electrode plate was 33.3 μm. The second layer of electrode plate had a pore structure, at least a portion of the pore structure was filled with the pore-forming agent, and a porosity of the pore structure was calculated to be 0.294.

(3) A third layer of electrode plate was press-fit on the second layer of electrode plate by hot pressing, and fusion treatment was carried out to obtain the lithium-ion battery electrode. The third layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 8 parts by weight relative to 100 parts by weight of the active material. A thickness of the third layer of electrode plate was 33.3 μm. The third layer of electrode plate had a pore structure, at least a portion of the pore structure was filled with the pore-forming agent, and a porosity of the pore structure was calculated to be 0.334.

The lithium-ion battery electrode prepared in this example had three electrode plate layers. Along a direction gradually away from the current collector, the porosities of the pore structures in the electrode plate layers gradually increased. A total thickness of the three electrode plate layers was 100 $\mu$m, and an average porosity of the three electrode plate layers was 0.292.

Example 4

A lithium-ion battery electrode was prepared by the following method.

(1) A first layer of electrode plate was press-fit on a current collector (aluminum foil) by hot pressing. The first layer of electrode plate contained an active material (lithium iron phosphate), a conductive agent (carbon tubes and carbon black), and a binder (polytetrafluoroethylene). A content of the conductive agent was 1 part by weight and a content of the binder was 3 parts by weight relative to 100 parts by weight of the active material. A thickness of the first layer of electrode plate was 25 $\mu$m. The first layer of electrode plate had a pore structure, and a porosity of the pore structure was calculated to be 0.25.

(2) A second layer of electrode plate was press-fit on the first layer of electrode plate by hot pressing. The second layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 2 parts by weight relative to 100 parts by weight of the active material. A thickness of the second layer of electrode plate was 25 $\mu$m. The second layer of electrode plate had a pore structure, at least a portion of the pore structure was filled with the pore-forming agent, and a porosity of the pore structure was calculated to be 0.272.

(3) A third layer of electrode plate was press-fit on the second layer of electrode plate by hot pressing. The third layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 4 parts by weight relative to 100 parts by weight of the active material. A thickness of the third layer of electrode plate was 25 $\mu$m. The third layer of electrode plate had a pore structure, at least a portion of the pore structure was filled with the pore-forming agent, and a porosity of the pore structure was calculated to be 0.294.

(4) A fourth layer of electrode plate was press-fit on the third layer of electrode plate by hot pressing, and fusion treatment was carried out to obtain the lithium-ion battery electrode. The fourth layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 8 parts by weight relative to 100 parts by weight of the active material. A thickness of the fourth layer of electrode plate was 25 $\mu$m. The fourth layer of electrode plate had a pore structure, at least a portion of the pore structure was filled with the pore-forming agent, and a porosity of the pore structure was calculated to be 0.334.

The lithium-ion battery electrode prepared in this example had four electrode plate layers. Along a direction gradually away from the current collector, the porosities of the pore structures in the electrode plate layers gradually increased. A total thickness of the four electrode plate layers was 100 $\mu$m, and an average porosity of the four electrode plate layers was 0.287.

Example 5

A lithium-ion battery electrode was prepared by the following method.

(1) A first layer of electrode plate was press-fit on a current collector (aluminum foil) by hot pressing. The first layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 4 parts by weight relative to 100 parts by weight of the active material. A thickness of the first layer of electrode plate was 33.3 $\mu$m. The first layer of electrode plate had a pore structure, at least a portion of the pore structure was filled with the pore-forming agent, and a porosity of the pore structure was calculated to be 0.294.

(2) A second layer of electrode plate was press-fit on the first layer of electrode plate by hot pressing. The second layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 8 parts by weight relative to 100 parts by weight of the active material. A thickness of the second layer of electrode plate was 33.3 $\mu$m. The second layer of electrode plate had a pore structure, at least a portion of the pore structure was filled with the pore-forming agent, and a porosity of the pore structure was calculated to be 0.334.

(3) A third layer of electrode plate was press-fit on the second layer of electrode plate by hot pressing, and fusion treatment was carried out to obtain the lithium-ion battery electrode. The third layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 12 parts by weight relative to 100 parts by weight of the active material. A thickness of the third layer of electrode plate was 33.3 $\mu$m. The third layer of electrode plate had a pore structure, at least a portion of the pore structure was filled with the pore-forming agent, and a porosity of the pore structure was calculated to be 0.368.

The lithium-ion battery electrode prepared in this example had three electrode plate layers. Along a direction gradually away from the current collector, the porosities of the pore structures in the electrode plate layers gradually increased. A total thickness of the three electrode plate layers was 100 $\mu$m, and an average porosity of the three electrode plate layers was 0.332.

Comparative Example 1

A lithium-ion battery electrode was prepared by the following method.

A single layer of electrode plate was press-fit on a current collector (aluminum foil) by hot pressing, to obtain a lithium-ion battery electrode. The single layer of electrode plate contained an active material (lithium iron phosphate), a conductive agent (carbon tubes and carbon black), and a binder (polytetrafluoroethylene). A content of the conductive agent was 1 part by weight and a content of the binder was 3 parts by weight relative to 100 parts by weight of the active material. A thickness of the single layer of electrode plate was 100 $\mu$m. The single layer of electrode plate had a pore structure, and a porosity of the pore structure was calculated to be 0.25.

Comparative Example 2

A lithium-ion battery electrode was prepared by the following method.

A single layer of electrode plate was press-fit on a current collector (aluminum foil) by hot pressing, to obtain a lithium-ion battery electrode. The single layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 2 parts by weight relative to 100 parts by weight of the active material. A thickness of the single layer of electrode plate was 100 $\mu$m. The single layer of electrode plate had a pore structure, at least a portion of the pore structure was filled with the pore-forming agent, and a porosity of the pore structure was calculated to be 0.272.

Comparative Example 3

A lithium-ion battery electrode was prepared by the following method.

(1) A first layer of electrode plate was press-fit on a current collector (aluminum foil) by hot pressing. The first layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 4 parts by weight relative to 100 parts by weight of the active material. A thickness of the first layer of electrode plate was 33.3 $\mu$m. The first layer of electrode plate had a pore structure, at least a portion of the pore structure was filled with the pore-forming agent, and a porosity of the pore structure was calculated to be 0.294.

(2) A second layer of electrode plate was press-fit on the first layer of electrode plate by hot pressing. The second layer of electrode plate contained an active material (lithium iron phosphate), a conductive agent (carbon tubes and carbon black), a binder (polytetrafluoroethylene), and a pore-forming agent (lithium oxalyldifluoroborate). A content of the conductive agent was 1 part by weight, a content of the binder was 3 parts by weight, and a content of the pore-forming agent was 2 parts by weight relative to 100 parts by weight of the active material. A thickness of the second layer of electrode plate was 33.3 $\mu$m. The second layer of electrode plate had a pore structure, at least a portion of the pore structure was filled with the pore-forming agent, and a porosity of the pore structure was calculated to be 0.272.

(3) A third layer of electrode plate was press-fit on the second layer of electrode plate by hot pressing, and fusion treatment was carried out to obtain the lithium-ion battery electrode. The third layer of electrode plate contained an active material (lithium iron phosphate), a conductive agent (carbon tubes and carbon black), and a binder (polytetrafluoroethylene). A content of the conductive agent was 1 part by weight and a content of the binder was 3 parts by weight relative to 100 parts by weight of the active material. A thickness of the third layer of electrode plate was 33.3 $\mu$m. The third layer of electrode plate had a pore structure, and a porosity of the pore structure was calculated to be 0.25.

The lithium-ion battery electrode prepared in this comparative example had three electrode plate layers. Along a direction gradually away from the current collector, the porosities of the pore structures in the electrode plate layers gradually decreased. A total thickness of the three electrode plate layers was 100 $\mu$m, and an average porosity of the three electrode plate layers was 0.272.

Test Example

The lithium-ion battery electrodes prepared in Examples 1 to 5 and Comparative Examples 1 to 3 were used as positive electrodes, and respectively assembled with a corresponding negative electrode and electrolyte solution to form lithium-ion batteries. The batteries were designed to have a capacity of 1.8 Ah.

A process of preparing a negative electrode plate was as follows. Artificial graphite, carbon black as a conductive agent, sodium carboxymethyl cellulose (CMC) as a thickener, and styrene butadiene rubber (SBR) as a binder were mixed according to the mass ratio of 96.4:1:1.2:1.4, followed by addition of deionized water and stirring by a mixer to obtain a uniform negative electrode slurry system. The slurry was coated on a copper foil current collector, followed by drying, rolling, and cutting to obtain the negative electrode plate.

Preparation of electrolyte solution: organic solvents were mixed. The organic solvents were selected from one or more of a cyclic carbonate, a chain carbonate, or a carboxylate. Then fully dried $LiPF_6$ was dissolved in the mixed solvent to prepare an electrolyte solution with a concentration of 1 mol/L.

The tortuosity, gram capacity (capacity per unit mass), capacity per unit area, internal resistance, and discharge capacity ratio of the positive electrode in each lithium-ion battery were measured using conventional methods in the art.

Tortuosity measurement: through FIB-SEM, the electrode plate was cut layer by layer, then the electrode plate structure was reconstructed in three dimensions, and the tortuosity of the electrode plate was obtained by software simulation.

Gram capacity measurement: after formation and capacity grading, the assembled batteries were charged to 3.8 V at a constant current of 0.33 C and a constant voltage, cut off at 0.05 C, and then discharged to 2.0 V at 0.33 C to obtain a discharge capacity. The discharge capacity was divided by the total coating amount of the battery to obtain a gram capacity, measured in m Ah/g.

Capacity per unit area: a ratio of the discharge capacity to a total area of the positive plate was defined as the capacity per unit area, measured in m Ah/cm$^2$.

Internal resistance: the battery was adjusted to 50% SOC and allowed to stand for 2 h, and a voltage V1 was recorded. The battery was discharged at 1.5 C for 30s, and a voltage V2 was recorded. An impedance value was obtained based on (V1-V2)/1.5 C.

Rate discharge capacity ratio: the battery was charged at a constant current of 0.33 C and a constant voltage to 3.8 V, cut off at 0.05 C, and then discharged at 0.2 C to 2.0 V. Then the battery was charged at a constant current of 0.33 C and a constant voltage to 3.8 V, cut off at 0.05 C, and then discharged at 2 C to 2.0 V. A ratio of a capacity obtained by discharge at 2C to a capacity obtained by discharge at 0.2 C is defined as the rate discharge capacity ratio.

The measurement results are shown in Tables 1 and 4.

Table 1

|  | Tortuosity |
|---|---|
| Example 1 | 2.1 |
| Example 2 | 1.9 |
| Example 3 | 1.8 |
| Example 4 | 1.8 |

(continued)

| | Tortuosity |
|---|---|
| Example 5 | 1.7 |
| Comparative Example 1 | 2.6 |
| Comparative Example 2 | 2.5 |
| Comparative Example 3 | 2.7 |

As can be seen from Table 1, the lithium-ion battery positive electrodes of Examples 1 to 5 had a low tortuosity.

Table 2

| Examples | Capacity per unit mass at 0.33 C (m Ah/g) | Capacity per unit area (m Ah/cm$^2$) |
|---|---|---|
| Example 1 | 138.0 | 3.615 |
| Example 2 | 138.5 | 3.629 |
| Example 3 | 139.0 | 3.542 |
| Example 4 | 139.0 | 3.603 |
| Example 5 | 139.1 | 3.424 |
| Comparative Example 1 | 136.0 | 3.563 |
| Comparative Example 2 | 136.4 | 3.573 |
| Comparative Example 3 | 136.2 | 3.568 |

As can be seen from Table 2, the lithium-ion battery positive electrodes of Examples 1 to 5 had a high gram capacity and a high capacity per unit area, and with the increase of porosity, the gram capacity gradually increased, but the capacity per unit area exhibits a tendency of increasing first and then decreasing.

Table 3

| Examples | DCIR (mΩ) |
|---|---|
| Example 1 | 51.9 |
| Example 2 | 50.5 |
| Example 3 | 48.1 |
| Example 4 | 47.1 |
| Example 5 | 52 |
| Comparative Example 1 | 60.9 |
| Comparative Example 2 | 58.2 |
| Comparative Example 3 | 59.6 |

As can be seen from Table 3, the lithium-ion battery positive electrodes of Examples 1 to 5 had a low impedance.

Table 4

| Examples | 2C/0.2C discharge ratio |
|---|---|
| Example 1 | 0.941 |
| Example 2 | 0.962 |
| Example 3 | 0.983 |
| Example 4 | 0.985 |

(continued)

| Examples | 2C/0.2C discharge ratio |
|---|---|
| Example 5 | 0.985 |
| Comparative Example 1 | 0.875 |
| Comparative Example 2 | 0.898 |
| Comparative Example 3 | 0.872 |

As can be seen from Table 4, the lithium-ion battery positive electrodes of Examples 1 to 5 had a higher rate discharge retention rate.

As can be seen from the data in Tables 1 to 4, the lithium-ion battery positive electrodes of Examples 1 to 5 had a low tortuosity and impedance, and had a high gram capacity, capacity per unit area, and rate discharge retention rate, indicating that the lithium-ion battery electrode of the present disclosure has good kinetic properties.

Although the embodiments of the present disclosure have been described above in conjunction with the accompanying drawings, the present disclosure is not limited to the specific embodiments described above, and the specific embodiments described above are merely illustrative and not restrictive. Those having ordinary skill in the art can make various changes and modifications based on the teachings of the present disclosure without departing from the spirit of the present disclosure and the scope of the appended claims. Such changes and modifications also fall within the protection scope of the present disclosure.

## Claims

1. A lithium-ion battery electrode, comprising a current collector and n electrode plate layers laminated on the current collector, n being an integer greater than or equal to 2,
   wherein each of the electrode plate layers contains a pore-forming agent, and a content of the pore-forming agent in each of the electrode plate layers gradually increases along a direction gradually away from the current collector; and the pore-forming agent is selected from an electrolyte solution additive which is solid at normal temperature.

2. The electrode according to claim 1, wherein each of the electrode plate layer further contains an active material; and a content of the pore-forming agent in a first electrode plate layer is between 0 and 4 parts by weight, a content of the pore-forming agent in an $n^{th}$ electrode plate layer is between 1 and 10 parts by weight, and a content of the pore-forming agent from a second to $(n-1)^{th}$ electrode plate layers is between 1 and 10 parts by weight, relative to 100 parts by weight of the active material, along the direction gradually away from the current collector.

3. The electrode according to claim 1 or 2, wherein each of the electrode plate layers has a pore structure, and at least a portion of the pore structure is filled with the pore-forming agent; and
   along the direction gradually away from the current collector, a porosity $\delta_i$ of the pore structure in an $i^{th}$ electrode plate layer is:

$$\delta_i = 1 - \left[\frac{(1-\varepsilon_i)}{\rho_1}\right] / \left[\frac{(1-\varepsilon_i)}{\rho_2} + \frac{\varepsilon_i}{\rho_3}\right],$$

wherein
1≤i≤n, and i is an integer; $\varepsilon_i$ represents a weight ratio of the pore-forming agent to the active material in the $i^{th}$ electrode plate layer; $\rho_1$ represents a true density of the active material, measured in $g/cm^3$; $\rho_2$ represents an ultimate compaction density of the active material, measured in $g/cm^3$; and $\rho_3$ represents a true density of the pore-forming agent, measured in $g/cm^3$.

4. The electrode according to any one of claims 1 to 3, wherein in the electrode, an average porosity of the pore structures in the n electrode plate layers satisfies the following condition:

$$0.22 \leq 1 - \left[\frac{(\sum_{i=1}^{n}(1-\delta_i)*d_i)}{\sum_{i=1}^{n}d_i}\right] \leq 0.44,$$

wherein $d_i$ represents a thickness of an $i^{th}$ electrode plate layer, measured in $\mu$m.

5. The electrode according to any one of claims 1 to 4, wherein in the electrode, porosities of the pore structures in two adjacent electrode plate layers satisfy the following condition:

$$\delta_{i+1} = \delta_i + (\delta_n - \delta_1)/n.$$

6. The electrode according to any one of claims 1 to 5, wherein a bulk density of the first electrode plate layer is between 2.55 g/cm$^3$ and 2.75 g/cm$^3$, a bulk density of the n$^{th}$ electrode plate layer is between 2.0 g/cm$^3$ and 2.5 g/cm$^3$, and bulk densities of from a second to (n-1)$^{th}$ electrode plate layers are between 2.0 g/cm$^3$ and 2.70 g/cm$^3$, along the direction gradually away from the current collector.

7. The electrode according to any one of claims 1 to 6, wherein in the electrode, a total thickness of the n electrode plate layers is between 20 $\mu$m and 200 $\mu$m.

8. The electrode according to any one of claims 1 to 7, wherein n is an integer between 2 and 10.

9. The electrode according to any one of claims 1 to 8, wherein n is an integer between 2 and 5.

10. The electrode according to any one of claims 1 to 9, wherein each of the electrode plate layers further contains a conductive agent and a binder, and a content of the conductive agent is between 0.1 and 5 parts by weight and a content of the binder is between 0.5 and 5 parts by weight relative to 100 parts by weight of the active material;

    the active material is selected from at least one of lithium nickel cobalt manganese oxide, lithium iron phosphate, or lithium manganate;
    the conductive agent is selected from at least one of carbon nanotubes, graphene, carbon black, or carbon fibers;
    the binder is selected from polyvinylidene fluoride and/or polytetrafluoroethylene; and
    the pore-forming agent is selected from at least one of lithium oxalyldifluoroborate, lithium bis(fluorosulfonyl)imide, lithium borate, lithium tetraborate, lithium tetrafluoroborate, lithium nitrate, or lithium chloride.

11. The electrode according to any one of claims 1 to 10, wherein the pore-forming agent is lithium oxalyldifluoroborate and/or lithium bis(fluorosulfonyl)imide.

12. A method for preparing a lithium-ion battery electrode according to any one of claims 1 to 11, comprising: sequentially laminating and press-fitting n layers of electrode plates containing different contents of a pore-forming agent onto a current collector in ascending order of the contents of the pore-forming agent, to obtain the lithium-ion battery electrode.

13. The method of claim 12, wherein the electrode plate is prepared by the following method:

    air-crushing and mixing an active material, a conductive agent, a binder, and the pore-forming agent to obtain a mixed material;
    heating and melting the mixed material, followed by electrostatic spinning to obtain a fibrous material; and
    hot-pressing the fibrous material to obtain the electrode plate.

14. A lithium-ion battery, comprising a porous electrode, the porous electrode being obtained by soaking a lithium-ion battery electrode according to any one of claims 1 to 11 or a lithium-ion battery electrode prepared using a method according to claim 12 or 13 in an electrolyte solution.

Electrode plate layer

Pore-forming agent

Soak in an electrolyte solution

Pore structure

FIG. 1

FIG. 2

## INTERNATIONAL SEARCH REPORT

| | International application No. |
|---|---|
| | **PCT/CN2022/120594** |

**A. CLASSIFICATION OF SUBJECT MATTER**

H01M 4/13(2010.01)i; H01M 4/62(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 电极, 正极, 负极, 阴极, 阳极, 孔隙, 造孔, 溶解, 电解液, 电解质, batter+, cell?, electrode?, positive, negative, anode, cathode, pore, form+, dissolv+, electrolyte

**C. DOCUMENTS CONSIDERED TO BE RELEVANT**

| Category* | Citation of document, with indication, where appropriate, of the relevant passages | Relevant to claim No. |
|---|---|---|
| Y | CN 102324493 A (DONGGUAN AMPEREX TECHNOLOGY LIMITED et al.) 18 January 2012 (2012-01-18)<br>description, paragraphs 9-46, and figure 1 | 1-14 |
| Y | JP 2010050076 A (HITACHI CHEMICAL CO., LTD.) 04 March 2010 (2010-03-04)<br>description, paragraphs 10-81 | 1-14 |
| Y | CN 113328098 A (ZHUHAI COSMX BATTERY CO., LTD.) 31 August 2021 (2021-08-31)<br>description, paragraphs 6-49 | 1-14 |
| Y | CN 111785922 A (SVOLT ENERGY TECHNOLOGY CO., LTD.) 16 October 2020 (2020-10-16)<br>description, paragraphs 4-30 | 1-14 |
| A | CN 110224112 A (SHANDONG HUAYI BIKE NEW ENERGY CO., LTD.) 10 September 2019 (2019-09-10)<br>entire document | 1-14 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 November 2022** | **30 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/120594**

| Patent document cited in search report | | | Publication date (day/month/year) | Patent family member(s) | Publication date (day/month/year) |
|---|---|---|---|---|---|
| CN | 102324493 | A | 18 January 2012 | None | |
| JP | 2010050076 | A | 04 March 2010 | None | |
| CN | 113328098 | A | 31 August 2021 | None | |
| CN | 111785922 | A | 16 October 2020 | None | |
| CN | 110224112 | A | 10 September 2019 | None | |

Form PCT/ISA/210 (patent family annex) (January 2015)

**EP 4 345 933 A1**

**REFERENCES CITED IN THE DESCRIPTION**

**Patent documents cited in the description**

- CN 202111122407